# EUROPÄISCHE PATENTSCHRIFT

(11) **EP 4 089 603 B1**
(45) Veröffentlichungstag und Bekanntmachung des Hinweises auf die Patenterteilung: **09.10.2024**
(21) Anmeldenummer: 22173262.1
(22) Anmeldetag: 13.05.2022
(51) Int. Cl.: G06Q 10/08

(54) **STEUERUNGSVORRICHTUNG FÜR EIN FRACHTLADESYSTEM, FRACHTLADESYSTEM SOWIE VERFAHREN ZUR POSITIONIERUNG VON CONTAINERN UND/ODER PALETTEN AUF EINEM FRACHTDECK EINES FRACHTFLUGZEUGS**
CONTROL DEVICE FOR A FREIGHT LOADING SYSTEM, FREIGHT LOADING SYSTEM AND METHOD FOR POSITIONING CONTAINERS AND / OR PALLETS ON A CARGO DECK OF A CARGO AIRCRAFT
DISPOSITIF DE COMMANDE POUR SYSTÈME DE CHARGEMENT DE FRET, SYSTÈME DE CHARGEMENT DE FRET, AINSI QUE PROCÉDÉ DE POSITIONNEMENT DES CONTENEURS ET/OU DES PALETTES SUR UN PONT DE CHARGEMENT D'UN AÉRONEF DE FRET

(30) Priorität: 14.05.2021 DE 102021112593
(43) Veröffentlichungstag der Anmeldung: 16.11.2022
(73) Patentinhaber: Telair International GmbH, 83714 Miesbach (DE)
(72) Erfinder: Kieser, Benedikt, 83734 Hausham (DE); Mengual Hinojosa, Marcos, 83714 Miesbach (DE); Urch, Matthias, 85658 Egmating (DE)
(74) Vertreter: Meissner Bolte Partnerschaft mbB

(56) Entgegenhaltungen:
- DE-A1- 102005 019 194
- DE-A1- 102005 026 898
- US-A1- 2013 297 065

## Beschreibung

Die Erfindung betrifft eine Steuerungsvorrichtung für ein Frachtladesystem, ein Frachtladesystem sowie ein Verfahren zur Positionierung von Containern und/oder Paletten auf einem Frachtdeck eines Frachtflugzeugs.

Zum Transport von Luftfracht werden Frachtstücke, wie Container und/oder Paletten ("Unit Load Devices - ULDs"), deren Maße in der Regel bestimmte Normen erfüllen, innerhalb eines Frachtraums eines Frachtflugzeugs mittels Riegelelementen am Frachtdeck des Frachtraums befestigt. Derartige Riegelelemente bilden häufig Frachtladebahnen aus, zwischen denen die genormten Frachtstücke positioniert werden können. Um die Frachtstücke an den für sie vorgesehenen Positionen zu positionieren, werden Frachtladesysteme verwendet, die das Bodenpersonal beim Be- und Entladen unterstützen.

Um den Be- und Entladevorgang möglichst effizient zu gestalten, verfügen die Frachtdecke beispielsweise über Kugelmatten, die es ermöglichen, die Frachtstücke mit geringem Kraftaufwand auf dem Frachtdeck zu transportieren. Des Weiteren sind Frachtfördereinrichtungen wie Rollenantriebseinheiten ("PDUs: Power Drive Units") regelmäßig vorgesehen, die die für den Transport notwendige Kraft aufbringen.

Dokument US2013297065 betrifft ein Ladesystem für ein Flugzeug, wobei das Ladesystem umfasst: einen Steuercomputer; eine Vielzahl von Frachtfördereinrichtungen zum Befördern eines Frachtstücks auf einem Frachtladedeck des Flugzeugs, wobei der Steuercomputer zur Ansteuerung der Frachtfördereinrichtung kommunikativ mit den Frachtfördereinrichtungen verbunden ist; mindestens eine Eingabeeinrichtung, die kommunikativ mit dem Steuercomputer verbunden ist, um Benutzereingaben an den Steuercomputer weiterzuleiten.

Gleichwohl kann bei einem Be- und Entladen der Fracht nicht auf das Bodenpersonal verzichtet werden, da viele Ladevorgänge aufgrund von unterschiedlichen Ladekonfigurationen, Abmessungen der Frachtstücke, Überständen, usw. sehr individuell sind. In der EP 2 418 145 A2 ist beispielsweise ein Frachtraumboden bzw. Frachtdeck dargestellt, der/das eine Vielzahl möglicher Ladekonfigurationen anbietet. Eine derartige Vielzahl möglicher Ladekonfiguration kann während eines Be- oder Entladevorgangs schnell unübersichtlich werden - gerade wenn unter hohem Zeitdruck gearbeitet werden muss.

Speziell Be- und Entladevorgänge von Frachtflugzeugen müssen in der Regel jedoch unter höchstem Zeitdruck erfolgen, da jede Minute, die ein Flugzeug auf dem Boden verbringt, betreiberseitige Kosten verursacht. Speziell bei häufig wechselnder Fracht mit unterschiedlichen Maßen, Flugzeugtypen, Frachtsystemen Ladekonfigurationen, etc. können dem zuständigen Personal hier also schnell Fehler in der Handhabung eines entsprechenden Frachtladesystems unterlaufen. Eine derartige Fehlbedienung kann dazu führen, dass beispielsweise Abschnitte des Frachtdecks, das gesamte Frachtdeck oder Systemkomponenten des Frachtladesystems beschädigt werden.

Derartige Fehlbedienungen müssen jedoch zwingend verhindert werden, da ein defektes Frachtladesystem zu erheblichen Kosten führen kann. Eine Instandsetzung oder ein Austausch entsprechender Systemkomponenten oder ganzer Abschnitte des Frachtdecks ist sehr teuer.

Der vorliegenden Erfindung liegt die Aufgabe zu Grunde, eine Steuerungsvorrichtung sowie ein entsprechendes Verfahren zur Positionierung von Containern und/oder Paletten auf einem Frachtdeck eines Frachtflugzeugs mit verbesserter intuitiver Handhabung bereitzustellen, um eine Fehlbedienung möglichst auszuschließen sowie Probleme und/oder Verzögerungen beim Beladen des Frachtdecks zu vermeiden.

Diese Aufgabe wird durch die Gegenstände nach Anspruch 1, Anspruch 8, Anspruch 10 und Anspruch 15 gelöst,

Die Aufgabe der Erfindung wird durch eine Steuerungsvorrichtung für ein Frachtladesystem auf einem Frachtdeck eines Frachtflugzeugs gelöst, wobei die Steuerungsvorrichtung Folgendes aufweist:
eine Vielzahl von Auswahlschaltelementen zur Auswahl jeweils einer Ladekonfiguration;
mindestens eine erste Anzeigevorrichtung mit einem Display zur Ausgabe eines mindestens teilweisen Abbilds des Frachtdecks,
mindestens eine zweite Anzeigevorrichtung, die eine Vielzahl von Leuchtmittelanordnungen zur Anordnung auf dem Frachtdeck oder auf Systemkomponenten des Frachtladesystems aufweist; sowie eine Recheneinheit, die dazu ausgebildet ist:
   a) basierend auf Signalen von mindestens einigen der Auswahlschaltelementen eine ausgewählte Ladekonfiguration zu bestimmen;
   b) unter Verwendung der ausgewählten Ladekonfiguration einen Kennzeichnungsbereich auf dem Frachtdeck und/oder eine Kennzeichnungsauswahl von Systemkomponenten zu bestimmen;
   c) den Kennzeichnungsbereich und/oder die Kennzeichnungsauswahl unter Verwendung der ersten Anzeigevorrichtung und der zweiten Anzeigevorrichtung zu visualisieren.

Ein Gedanke der Erfindung besteht darin, die Steuerung eines Frachtladesystems derart einfach bzw. intuitiv zu gestalten, dass Probleme und Verzögerungen, die ggf. durch fehlendes Verständnis der Steuerung des Frachtladesystems entstehen können, drastisch zu reduzieren. Bei einer entsprechenden Steuerung und Einstellung einer Ladekonfiguration durch die erfindungsgemäße Steuerungsvorrichtung, wird hierfür auf einem Display im Frachtraum der Frachtraumgrundriss des Frachtflugzeuges mit dem Frachtladesystem angezeigt und darauf ein Kennzeichnungsbereich, beispielsweise ein Bereich der relevant ist für die eingestellte oder aktive Ladekonfiguration, dargestellt. Zusätzlich werden mit Lampen auf dem Frachtdeck direkt die ausgewählten oder aktiven Positionen oder Bereiche für eine entsprechende Ladekonfiguration angezeigt. D.h. die in dem Frachtraum durch das Display angezeigten Bereiche werden zusätzlich noch mit weiteren Lampen im Frachtraum verdeutlicht.

In anderen Worten kann ein Kern der Erfindung darin gesehen werden, dass eine im Wesentlichen gleichzeitige Visualisierung im virtuellen Raum (auf dem Monitor bzw. Display) sowie im physischen Raum (auf dem Frachtdeck) erfolgt.

So können Kennzeichnungsbereiche dargestellt bzw. hervorgehoben (gekennzeichnet) werden. Darunter können (Teil-)Bereiche des Frachtdecks bzw. Positionen auf dem Frachtdeck verstanden werden, an/in denen beispielsweise Frachtstücke, insbesondere ULDs wie Container und/oder Paletten anzuordnen sind oder angeordnet werden sollen.

Alternativ oder (bevorzugt) zusätzlich kann auch eine Kennzeichnungsauswahl von Systemkomponenten dargestellt bzw. hervorgehoben (gekennzeichnet) werden. Darunter kann verstanden werden, dass eine bzw. diejenige Auswahl von Systemkomponenten, deren Betrieb für ein Lademanöver benötigt wird, dargestellt bzw. hervorgehoben wird.

Dies ermöglicht dem Bodenpersonal auf besonders einfache Art die Einstellungen des Frachtladesystems zu begreifen sowie auf eine intuitive Weise, auch ohne besondere Vorkenntnisse, den Ladevorgang zu steuern.

Insbesondere kann das beschriebene Visualisieren der Bereiche oder der Auswahl vor dem eigentlichen Ladevorgang der Fracht mittels der Steuerungsvorrichtung erfolgen, um zunächst zu überprüfen, ob die Einstellungen die gewünschten sind. Das doppelte Anzeigen von Kennzeichnungsbereich/Kennzeichnungsauswahl (virtuell und im Frachtraum) kann auch dazu verwendet werden, um Hinweise zu geben. Beispielsweise um dem Bodenpersonal mögliche Ladepositionen für eine bestimmte Fracht anzuzeigen.

In einer Ausführungsform ist das mindestens eine Display zur Ausgabe des mindestens teilweisen Abbilds des Frachtdecks ausgebildet, derart, dass der Kennzeichnungsbereich und/oder die Kennzeichnungsauswahl im/als Teil des Abbilds visualisiert wird.

Dadurch wird es ermöglicht, direkt an einem Bedienpanel, mögliche Ladekonfigurationen graphisch bzw. virtuell auf dem Display des Bedienpanels anzuzeigen. Entsprechend kann auf diese Weise schnell und einfach eine richtige bzw. gewünschte Ladekonfiguration eingestellt oder umgestellt (umkonfiguriert) werden. Dies ermöglicht dem zuständigen Bodenpersonal trotz häufig wechselnder Bedingungen und einem Ladevorgang unter Zeitdruck, einen schnellen Überblick über die aktuelle Situation zu erlangen. Insgesamt wird somit die Handhabung deutlich verbessert und Ladevorgänge können schnell und reibungslos abgewickelt werden.

Erfindungsgemäß weist die zweite Anzeigevorrichtung eine Vielzahl von Leuchtmittelanordnungen zur Anordnung an dem Frachtdeck und/oder auf den Systemkomponenten auf und in einer Ausführungsform, ist die Recheneinheit kommunikativ, insbesondere über einen Bus, mit der zweiten Anzeigevorrichtung verbunden.

Hierdurch wird es ermöglicht, einen direkten Überblick für eine ausgewählte oder aktive Ladekonfiguration direkt auf dem Frachtdeck zu schaffen bzw. zu visualisieren. Derart kann das Frachtladesystem schnell, einfach und intuitiv entsprechend der anfallenden Fracht (um-)konfiguriert werden.

Unter einer Anordnung der Leuchtmittel auf den Systemkomponenten kann verstanden werden, dass ein oder mehrere Leuchtmittel (je nach Art der Systemkomponente) an den Systemkomponenten angebracht sein können, aber auch (falls die Systemkomponente ein Gehäuse aufweist) in ein Gehäuse integriert sein können oder in ein sonstiges Element einer Systemkomponente integriert sein können.

Die Recheneinheit kann ferner dazu ausgebildet sein, die zweite Anzeigevorrichtung bzw. die Leuchtmittelanordnungen, beispielsweise über ein Bus-System, anzusteuern, insbesondere entsprechend ein- und auszuschalten.

In einer Ausführungsform weist jede Leuchtmittelanordnung eine Vielzahl von Leuchtmitteln, beispielsweise LEDs, auf. Die Leuchtmittel sind in Gruppen derart zusammengefasst, dass mittels der Leuchtmittelanordnungen der Kennzeichnungsbereich und/oder die Kennzeichnungsauswahl auf dem Frachtdeck visualisierbar ist.

In einer Ausführungsform sind die Leuchtmittelanordnungen auf oder in Systemkomponenten, vorzugsweise auf Rollenantriebseinheiten, angeordnet.

Derart kann eine (optische) Zuordnung der aktiven oder der zu aktivierenden Systemkomponenten weiter verbessert werden.

In einer Ausführungsform ist die Recheneinheit dazu ausgebildet, erste und zweite Steuersignale von mindestens einer Steuermitteleinrichtung der Steuerungsvorrichtung zu empfangen und in Reaktion auf das erste Steuersignal, den Kennzeichnungsbereich auf dem Frachtdeck und/oder die Kennzeichnungsauswahl von Systemkomponenten zu bestimmen, und/oder in Reaktion auf das zweite Steuersignal Systemkomponenten im Kennzeichnungsbereich und/oder die Kennzeichnungsauswahl von Systemkomponenten anzusteuern.

Das erste Steuersignal kann beispielsweise Informationen in Bezug auf eine (Fracht-)Richtung (links, rechts, vor, zurück) enthalten und den Kennzeichnungsbereich und/oder die Kennzeichnungsauswahl entsprechend bestimmen und/oder (bei Änderung des ersten Steuerungssignal) aktualisieren. Derart wird ein intuitiver und kontrollierter Ladeprozess der Fracht an die gewünschten Positionen in der entsprechenden Ladekonfiguration ermöglicht.

In einer Ausführungsform ist die Recheneinheit dazu ausgebildet, mit einer Speichereinheit zu kommunizieren, wobei auf der Speichereinheit Informationen in Bezug auf einen Frachtraumgrundriss und/oder Informationen in Bezug auf die Vielzahl von Ladekonfigurationen gespeichert sind.

Dadurch wird es einerseits ermöglicht das Abbild des Frachtdecks sowie der Ladekonfigurationen bzw. der Kennzeichnungsbereiche und/oder der Kennzeichnungsauswahl auf dem Frachtdeck zu ermöglichen. Andererseits wird dadurch die Flexibilität der Steuerungsvorrichtung erhöht. So können beispielsweise je nach Flugzeugtyp und/oder Frachtladesystem entsprechende Daten bzw. Informationen in Bezug auf einen entsprechenden Frachtraumgrundriss auf die Speichereinheit gespielt werden. Auch Updates von Informationen bzw. Daten in Bezug auf mögliche Ladekonfigurationen oder geänderten Frachtmaßen lassen sich so schnell und kostengünstig umsetzen.

Die erfindungsgemäße Aufgabe wird auch durch ein Frachtladesystem eines Frachtflugzeugs gelöst, wobei das Frachtladesystem eine Steuerungsvorrichtung umfasst, wie sie in den vorhergehenden Absätzen beschrieben wurde.

Hieraus ergeben sich die selben Vorteile wie sie bereits im Zusammenhang mit der Steuerungsvorrichtung beschrieben wurden.

Zudem sei darauf hingewiesen, dass die im Rahmen der erfindungsgemäßen Steuerungsvorrichtung beschriebenen Merkmale und Vorteile auch auf das erfindungsgemäße Frachtladesystem zutreffen. Merkmale der Steuerungsvorrichtung sind auf das erfindungsgemäße Frachtladesystem übertragbar.

In einer Ausführungsform ist mindestens ein Display der Steuerungsvorrichtung an einem Bedienpanel in der Nähe einer Frachttür des Frachtflugzeugs angeordnet und eine Vielzahl von Leuchtmittelanordnungen auf dem Frachtdeck und/oder auf Systemkomponenten des Frachtladesystems, vorzugsweise an/in Rollenantriebseinheiten, angeordnet, um eine Positionierung von Containern und/oder Paletten zu unterstützen.

Die erfindungsgemäße Aufgabe wird auch durch ein Verfahren zur Positionierung von Containern und/oder Paletten für ein Frachtladesystem auf einem Frachtdeck eines Frachtflugzeugs, insbesondere mittels einer Steuerungsvorrichtung wie in den vorhergehenden Absätzen beschrieben, gelöst, wobei das Verfahren folgende Schritte aufweist:
- Auswählen einer Ladekonfiguration aus einer Vielzahl von möglichen Ladekonfigurationen für Container und/oder Paletten auf dem Frachtdeck;
- Bestimmen eines Kennzeichnungsbereichs auf dem Frachtdeck und/oder einer Kennzeichnungsauswahl von Systemkomponenten unter Verwendung der ausgewählten Ladekonfiguration;
- Visualisieren des Kennzeichnungsbereichs bzw. der Kennzeichnungsauswahl auf mindestens einer ersten Anzeigevorrichtung mit einem Display im Frachtraum sowie unter Verwendung mindestens einer zweiten Anzeigevorrichtung, die eine Vielzahl von Leuchtmittelanordnungen auf dem Frachtdeck, insbesondere auf Systemkomponenten (S) des Frachtladesystems aufweist.

Hieraus ergeben sich die selben Vorteile wie sie bereits im Zusammenhang mit der Steuerungsvorrichtung und/oder dem entsprechenden Frachtladesystem beschrieben wurden.

Ebenso sind Merkmale des erfindungsgemäßen Verfahrens auf die erfindungsgemäße Steuerungsvorrichtung oder das Frachtsystem übertragbar, indem die entsprechende Einrichtung derart konfiguriert wird, dass sie zur Ausführung der entsprechenden Verfahrensmerkmale geeignet ist.

In einer Ausführungsform erfolgt ein graphisches Visualisieren des Kennzeichnungsbereichs und/oder der Kennzeichnungsauswahl auf dem Display in dem Frachtraum unter Bezugnahme auf einen Frachtraumgrundriss des Frachtflugzeugs.

Auf diese Weise lässt sich der Ladevorgang in die entsprechende Ladekonfiguration (vorab, vor dem Starten eines Ladeprozesses) virtuell auf dem Display darstellen bzw. nachvollziehen, um mögliche vermeidbare Fehler- bzw. Störquellen vorab zu erkennen und bei dem tatsächlichen Ladeprozess gar nicht erst aufkommen zu lassen. Derart kann ein Ladeprozess der Fracht intuitiv optimiert werden und Verzögerungen reduziert werden.

In einer Ausführungsform erfolgt ein optisches Visualisieren der zweiten Anzeigevorrichtung durch eine blinkende oder für einen vorbestimmten Zeitraum aufleuchtende entsprechende Leuchtmittelanordnung unmittelbar auf dem Frachtdeck.

Hierdurch wird es ermöglicht, einen direkten Überblick in Bezug auf die gewählte oder aktive Ladekonfiguration direkt auf dem Frachtdeck (in-situ) zu erzeugen. Derart kann das Frachtladesystem schnell, einfach und intuitiv (um-)konfiguriert werden. Durch entsprechende Leucht- oder Blinkeffekte kann eine Identifizierung der Bereiche für die anzuordnende Fracht oder die zu verwendenden Systemkomponenten auch bei schlechten Lichtverhältnissen ermöglicht werden. Bei dem Aufleuchten in einem vorbestimmten Zeitraum kann es sich beispielsweise um einen Zeitparameter wie 1 s oder 2 s handeln. Alternativ ist es möglich, den Zeitraum des Aufleuchtens auf eine Dauer zu beschränken, in der ein entsprechendes Auswahlschaltelement gedrückt wird.

In einer Ausführungsform umfasst das Verfahren einen Schritt zum Abfragen und Visualisieren eines aktivierten Bereichs bzw. einer aktivierten Ladekonfiguration des Frachtladesystems und/oder einer Position des Frachtdecks.

Auf diese Weise wird dem zuständigen Bodenpersonal eine schnelle und intuitive Möglichkeit gegeben vorab (vor dem eigentlichen Ladeprozess) zu kontrollieren, welche Ladekonfiguration bzw. welche Systemkomponenten für die entsprechende Ladekonfiguration momentan (beispielsweise von einem vorhergehenden Ladeprozess) überhaupt aktiviert ist. Unter Umständen erspart dies eine ausführliche Inspektion durch das Personal am Frachtladesystem selbst, so dass im Falle einer bereits richtig eingestellten Ladekonfiguration nahezu überhaupt keine Verzögerung entsteht und für den Fall einer nötigen Umkonfiguration, dies in Kürze, insbesondere innerhalb weniger Sekunden (beispielsweise unter 10 Sekunden), erfolgen kann, so dass der Ladeprozess insgesamt schnell und reibungslos erfolgen kann.

In einer Ausführungsform umfasst das Verfahren einen Schritt zum Starten eines Ladevorgangs der Container und/oder Paletten entsprechend des Kennzeichnungsbereichs und/oder der Kennzeichnungsauswahl.

Derart kann das zuständige Bodenpersonal auch ohne Vorkenntnisse des Frachtladesystems dieses schnell und intuitiv bedienen, um Verzögerungen im Ladeprozess zu vermeiden.

Die erfindungsgemäße Aufgabe wird auch durch ein computerlesbares (Speicher-)Medium gelöst, das Instruktionen umfasst, die bei der Ausführung durch mindestens eine Recheneinheit diese veranlassen, ein Verfahren, wie in den vorhergehenden Absätzen beschrieben, zu implementieren.

Bevorzugte Ausführungsformen der Erfindung ergeben sich aus den Unteransprüchen.

Nachfolgend wird die Erfindung auch hinsichtlich weiterer Einzelheiten, Merkmale und Vorteile beschrieben, die anhand der Figuren näher erläutert werden. Die beschriebenen Merkmale und Merkmalskombinationen, wie nachfolgend in den Figuren der Zeichnung gezeigt und anhand der Zeichnung beschrieben, sind nicht nur in der jeweils angegebenen Kombination, sondern auch in anderen Kombinationen oder in Alleinstellung anwendbar, soweit sie in den Umfang der Ansprüche fallen.

Hierbei zeigt:
- Fig. 1: Darstellung verschiedener Ausführungsbeispiele von Ladekonfigurationen für eine Beladung in einem Frachtraum;
- Fig. 2: ein Bedienpanel nach einem Ausführungsbeispiel einer erfindungsgemäßen Steuerungsvorrichtung;
- Fig. 3: ein Ausführungsbeispiel, das einen graphisch visualisierten Frachtraumgrundriss auf einem Display der erfindungsgemäßen Steuerungsvorrichtung darstellt;
- Fig. 4: ein Ausführungsbeispiel, das einen graphisch visualisierten Frachtraumgrundriss sowie eine graphisch visualisierte Kennzeichnungsauswahl von aktiven Systemkomponenten des Frachtladesystems oder einen Kennzeichnungsbereich auf einem Display der erfindungsgemäßen Steuerungsvorrichtung darstellt;
- Fig. 5: ein alternatives Ausführungsbeispiel, das einen graphisch visualisierten Frachtraumgrundriss sowie eine graphisch visualisierte Kennzeichnungsauswahl von aktiven Systemkomponenten des Frachtladesystems oder einen Kennzeichnungsbereich auf einem Display der erfindungsgemäßen Steuerungsvorrichtung darstellt;
- Fig. 6: ein weiteres alternatives Ausführungsbeispiel, das einen graphisch visualisierten Frachtraumgrundriss sowie eine graphisch visualisierte Kennzeichnungsauswahl von aktiven Systemkomponenten des Frachtladesystems oder einen Kennzeichnungsbereich auf einem Display der erfindungsgemäßen Steuerungsvorrichtung darstellt;
- Fig. 7: eine schematische Darstellung eines Ausführungsbeispiels einer erfindungsgemäßen Steuerungsvorrichtung mit einem Display und zwei Leuchtmittelanordnungen auf dem Frachtdeck;

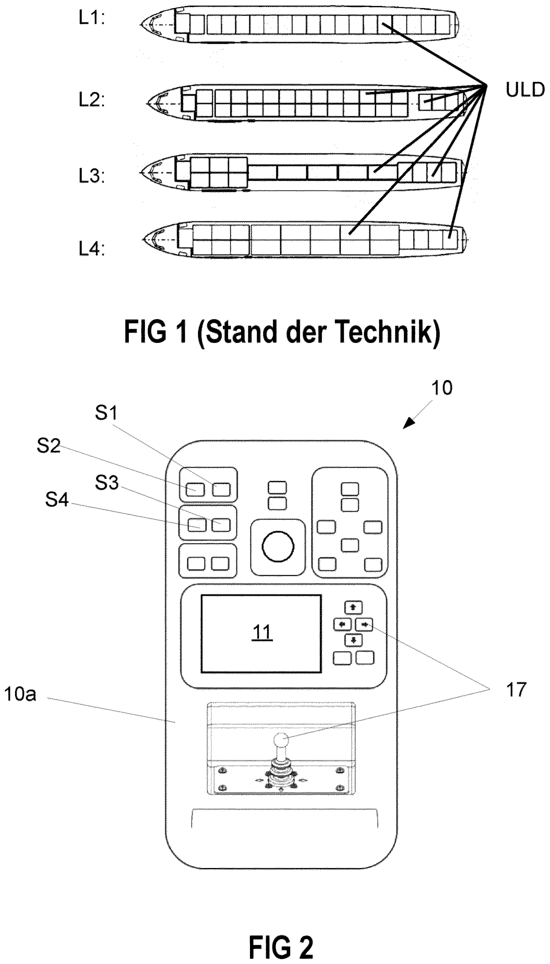

Fig. 1 zeigt eine schematische Darstellung von vier Beispielen für mögliche Ladekonfigurationen L1 bis L4 für eine Beladung auf einem Frachtdeck eines Frachtflugzeugs.

Wenn mittels eines Frachtladesystems, beispielsweise auf einem oberen Frachtdeck bzw. Maindeck, eine Beladung stattfindet, dann kann die Beladung im Allgemeinen mit verschiedensten Typen von ULDs (Unit Load Devices), z.B. in Form von Containern und/oder Paletten, erfolgen.

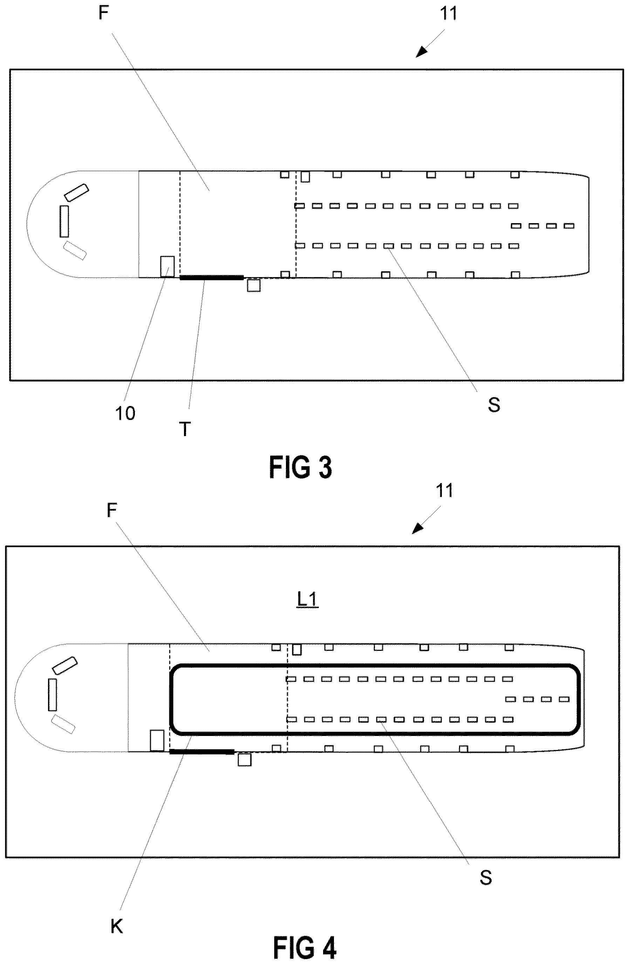

Das Frachtladesystem ist in der Regel dazu ausgebildet unterschiedliche Ladekonfigurationen anzubieten. Hierfür sind Systemkomponenten S (Fig. 3) wie Führungselemente und/oder Riegelelemente und/oder Rollenantriebseinheiten auf dem Frachtdeck vorgesehen. Die Systemkomponenten S umfassen ferner Rollenantriebseinheiten für eine Beförderung von ULDs.

In einem ersten Beispiel für Ladekonfiguration L1 ist eine "Single-Row"-Ladekonfiguration (einreihige zentrische Ladekonfiguration) dargestellt. In dieser Konfiguration werden die ULDs in einer Reihe über eine Gesamtlänge des Frachtdecks geladen. Diese Konfiguration ist besonders dazu geeignet schwere ULDs mit hohen Flächenlasten zu transportieren.

In dem Beispiel für Ladekonfiguration L2 ist eine abschnittsweise Side-By-Side (zweireihige) Ladekonfiguration gezeigt. In dieser Konfiguration werden die ULDs in zwei Reihen geladen und ggf. an einem vorderen Ende (links in Fig. 1) und an einem hinteren Ende (rechts in Fig. 1) des Flugzeugs noch einreihig ULDs platziert.

Ein drittes Beispiel einer Ladekonfigurationen L3 zeigt ebenso eine Mischkonfiguration mit einer teilweisen Single-Row-Ladekonfiguration. Somit können beispielsweise im Bug und Heck leichtere ULDs und mittig schwerere ULDs geladen werden.

Diese Ladekonfiguration L3 kann beispielsweise wiederrum zu einer vierten Ladekonfiguration L4 umkonfiguriert werden, die in dem mittleren Abschnitt zwei Reihen ULDs aufnimmt.

Weitere Ladekonfigurationen ergeben sich beispielsweise aus Anordnungen ähnlich zu den gezeigten Ladekonfigurationen L1 bis L4 für ULDs mit anderen Dimensionierungen. Beispielsweise kleinere und größere Paletten, zivile und militärische Paletten.

In der Regel hat das Beladepersonal ein Anweisungsdokument in dem dokumentiert wird, welche ULDs in welcher Reihenfolge an welcher Position zu beladen sind.

Um mit dem Frachtladesystem jede Beladung zu ermöglichen, gibt es in den Frachtern im Eingangsbereich Hauptbedienpanels, mit denen eine Reihe von Konfigurationseinstellungen möglich sind, um eine Beladung gemäß einem vorgegebenen Ladeplan zu ermöglichen.

Jedes Frachtladesystem ist allerdings anders von der Bedienung und unterscheidet sich manchmal massiv bezüglich der Steuerung. D.h. das Bodenpersonal muss auf die verschiedenen Systeme trainiert werden und sollte dann später solche Systeme möglichst fehlerfrei bedienen, um keine großen Verzögerungen und Probleme bei der Beladung zu verursachen.

Die erfindungsgemäße Steuerungsvorrichtung 10 soll Probleme und Verzögerungen, die ggf. durch fehlendes Verständnis der Systembedienung entstehen können, vermindern.

Hierfür weist die Steuerungsvorrichtung 10 ein Bedienpanel 10a auf. Ein Ausführungsbeispiel eines Bedienpanels 10a ist in Fig. 2 dargestellt.

Gemäß dem in Fig. 2 gezeigten Ausführungsbeispiel weist das Bedienpanel 10a ein Display 11 sowie vier Auswahlschaltelemente S1 bis S4 auf. Die Auswahlschaltelemente S1 bis S4 sind in diesem Ausführungsbeispiel als Schalter ausgebildet. Alternativ können die Auswahlschaltelemente S1 bis S4 auch durch einen Touchscreen (beispielsweise auch als Teil des Displays 11) ausgebildet sein.

Ferner weist das Bedienpanel 10a weitere Schalt- und/oder Steuermitteleinrichtungen 17, wie beispielsweise einen Joystick 17 und/oder Schalter 17, zur Steuerung eines Ladevorgangs durch die Systemkomponenten, wie beispielsweise den Rollenantriebseinheiten, des Frachtladesystems auf, um die ULDs entsprechend zu positionieren.

In dem Ausführungsbeispiel ist das Bedienpanel 10a in der Nähe einer Frachttür T (Fig. 3) des Frachtflugzeugs positioniert.

Das Bedienpanel 10a weist vier Auswahlschaltelemente S1 bis S4 zur jeweiligen Auswahl einer entsprechenden Ladekonfiguration L1 bis L4 auf. Beispielsweise also kann das Auswahlschaltelement S1 für eine Ladekonfiguration L1 betätigt werden, usw..

In alternativen Ausführungsbeispielen kann die Anzahl der Auswahlschaltelemente S1 bis S4 (und entsprechend die Anzahl der Ladekonfigurationen) deutlich höher sein.

Die Auswahlschaltelemente S1 bis S4 und das Display 11 sind jeweils mit einer Recheneinheit 12 verbunden. Erfindungsgemäß ist das Display 11 und/oder die Recheneinheit 12 dazu ausgebildet, einen entsprechenden Frachtraumgrundriss F des Flugzeugs auf dem Display 11 graphisch, also virtuell darzustellen.

Auf dem Frachtraumgrundriss F werden gemäß eines Ausführungsbeispiels auch entsprechende Positionen von Systemkomponenten S oder Systemkomponentengruppen für eine jeweilige Ladekonfiguration L1 bis L4 sowie die Positionen des Bedienpanels 10a und der Frachttür T dargestellt, um von der graphischen Anzeige eine möglichst gute Orientierung innerhalb des (virtuellen) Frachtraums zu ermöglichen.

Betätigt man eines der Auswahlschaltelemente S1 bis S4, so wird auf dem Display 11 innerhalb des dort angezeigten Frachtraumgrundrisses F eine ausgewählte Ladekonfiguration graphisch visualisiert.

In einer Weiterbildung dieses Ausführungsbeispiels kann das Display 11 herausnehmbar bzw. mobil ausgebildet sein, so dass es zur mobilen Verwendung beispielsweise innerhalb des Frachtraums und/oder außerhalb des Frachtraums (vorzugsweise in der Nähe der Frachttür) geeignet ist. Alternativ oder zusätzlich kann für eine entsprechende mobile Verwendung ein zweites mobiles Display und/oder mindestens ein mobiles Endgerät wie ein Smartphone oder ein Tabletcomputer vorgesehen sein, auf dem erfindungsgemäß (über eine entsprechende App) ein Kennzeichnungsbereich K und/oder eine Kennzeichnungsauswahl von Systemkomponenten S darstellbar und/oder auswählbar ist. Eine derartige mobile Verwendung kann beispielsweise über eine Bluetooth- oder WiFi-Verbindung (oder eine andere drahtlose Verbindung) zwischen dem entsprechenden mindestens einen mobilen Endgerät und/oder dem Display 11 und der Recheneinheit 12 realisiert werden.

Gemäß dem in Fig. 4 gezeigten Ausführungsbeispiel wurde ein Auswahlschaltelement für eine "Single Row"-Ladekonfiguration (= einreihige zentrische Beladung) betätigt.

Daher wird ein zentraler Bereich auf dem (virtuellen) Frachtraumgrundriss, der einem Bereich auf dem (realen) Frachtdeck entspricht, der für die Beladung genutzt werden soll, graphisch visualisiert - beispielsweise durch Aufleuchten oder Blinken oder eine entsprechende farbige Hervorhebung eines Kennzeichnungsbereichs K und/oder einer Kennzeichnungsauswahl (siehe skizzierte dicke schwarze Rahmenlinie in Fig. 4).

Dieser Bereich kann entweder eine (virtuelle) (Gesamt-)Anordnung von ULDs in dieser Ladekonfiguration visualisieren (Kennzeichnungsbereich K) und/oder einen Bereich, der sämtliche für diese Ladekonfiguration benötigten (aktiven oder zu aktivierenden) Systemkomponenten S anzeigt (Kennzeichnungsauswahl).

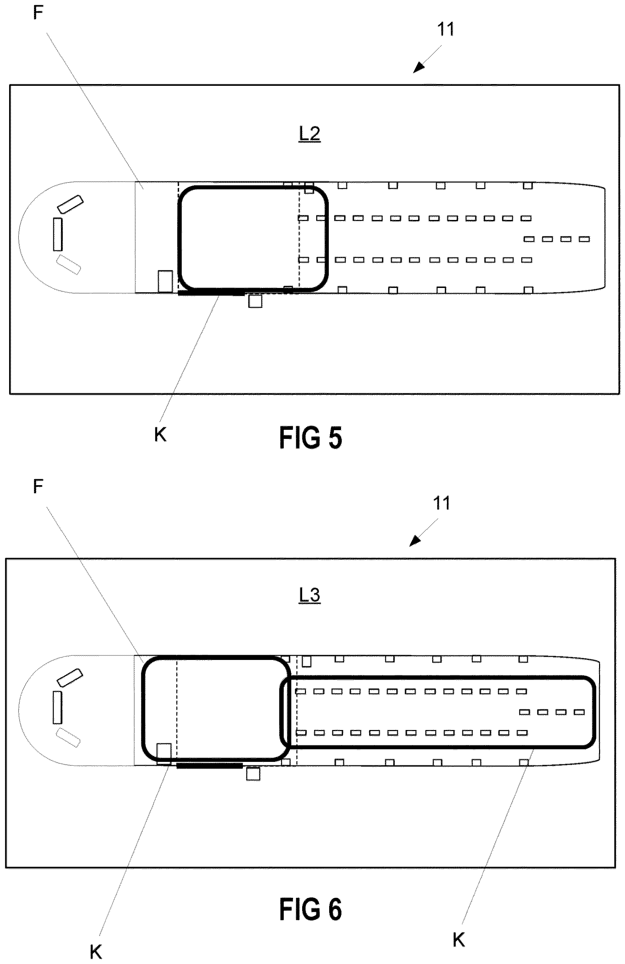

In Fig. 5 ist ein weiteres Ausführungsbeispiel für eine Anzeige auf dem Display 11 gezeigt. In dem in Fig. 5 gezeigten Ausführungsbeispiel wird ein (Kennzeichnungs-)Bereich K zur Positionierung von Containern und/oder Paletten gemäß einer Ladekonfiguration L2 auf dem Frachtraumgrundriss F dargestellt.

Diese Ladekonfiguration L2 bietet gemäß dem gezeigten Ausführungsbeispiel Platz für ULDs in einem vorderen Bereich in der Nähe der Frachttür T.

In Fig. 6 ist ein weiteres Ausführungsbeispiel für eine Anzeige auf dem Display 11 gezeigt. In dem in Fig. 6 gezeigten Ausführungsbeispiel wird ein Kennzeichnungsbereich K und/oder eine Kennzeichnungsauswahl gemäß einer Ladekonfiguration L3 auf dem Frachtraumgrundriss F dargestellt.

In diesem Ausführungsbeispiel zeigt das Display 11 entsprechend einem betätigtem Auswahlschaltelement S1 bis S4 an, dass die Beladung von der Frachttür T bis in den vorderen Bereich möglich ist.

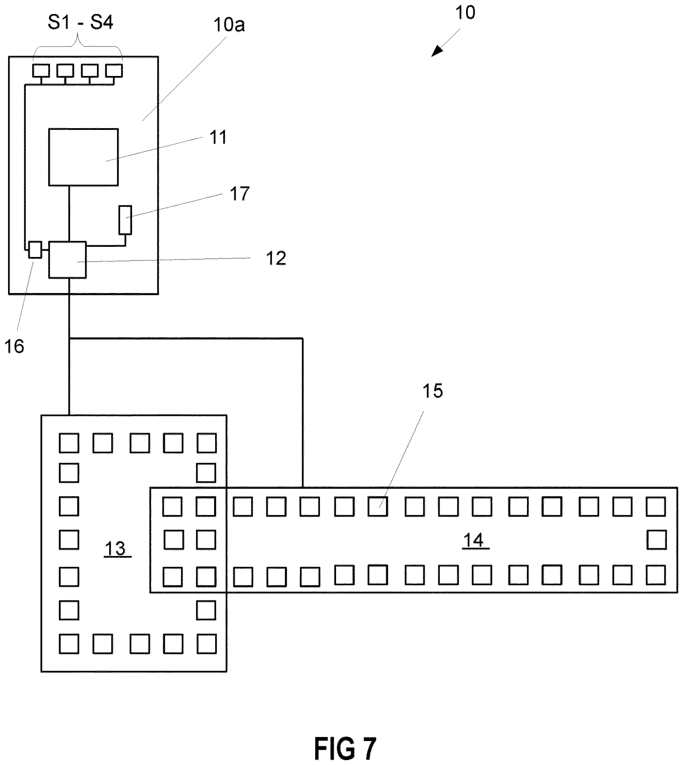

Zusätzlich zu einer graphischen bzw. virtuellen Anzeige eines Kennzeichnungsbereichs und/oder einer Kennzeichnungsauswahl auf dem Display 11 ist die erfindungsgemäß Steuerungsvorrichtung 10 dazu ausgebildet, eine optische Anzeige eines Kennzeichnungsbereichs K direkt (unmittelbar) auf dem Frachtdeck zu visualisieren. Hierfür weist die Steuerungsvorrichtung 10 mehrere Leuchtmittelanordnungen 13, 14 auf. Ein Ausführungsbeispiel, das dies skizzenhaft verdeutlicht, ist in Fig. 7 gezeigt.

Die Leuchtmittelanordnungen 13, 14 in Fig. 7 sind jeweils aus mehreren Leuchtmitteln 15, die in Gruppen zusammengefasst sind, gebildet. In einem Ausführungsbeispiel sind die Leuchtmittel 15 als LEDs ausgebildet.

Die Leuchtmittelanordnungen 13, 14 bzw. die zweite Anzeigevorrichtung ist kommunikativ mit der Recheneinheit 12 verbunden, beispielsweise über ein Bus-System, um diese zu steuern (insbesondere an- und auszuschalten).

In einem Ausführungsbeispiel können die Leuchtmittel 15 auf Systemkomponenten S, wie beispielsweise Rollenantriebseinheiten und/oder speziellen Leuchtmittelhalteanordnungen im Roller-Tray, des Frachtsystems angeordnet sein.

Konkret heißt dies, die in den Ausführungsbeispielen von Figuren 3 bis 5 gezeigten graphischen Darstellungen der Kennzeichnungsbereiche K auf dem Display 11 werden gleichzeitig direkt auf dem Frachtboden mittels entsprechender Leuchtmittelanordnungen 13, 14 angezeigt.

Im Allgemeinen ist es möglich, dass auf dem Display 11 ein Kennzeichnungsbereich K angezeigt wird, also Bereiche in die Frachtstücke zu verladen sind, während auf dem Frachtdeck die hierfür benötigten Systemkomponenten S hervorgehoben werden. Ebenso lässt sich der umgekehrte Fall realisieren. Also dass auf dem Display 11 eine Kennzeichnungsauswahl von Systemkomponenten S und auf dem Frachtdeck ein Kennzeichnungsbereich K angezeigt wird. Selbstverständlich können aber auch Display 11 und die zweite Anzeigevorrichtung auf dem Frachtdeck jeweils den (gleichen) Kennzeichnungsbereich K oder die (gleiche) Kennzeichnungsauswahl von Systemkomponenten S anzeigen.

Für die Kennzeichnung auf dem Frachtdeck können die Leuchtmittel 15 bzw. die Leuchtmittelanordnungen 13, 14 dauerhaft leuchten (beispielsweise in unterschiedlichen Farben) oder blinken.

Weiter sind auch Leuchtsequenzen denkbar, in denen die Leuchtmittel 15 beispielsweise der Reihe nach aktiviert oder deaktiviert werden. Auf diese Weise könnte auch eine (mittels der Steuerungsvorrichtung einstellbare) Zuladegeschwindigkeit der ULDs durch die Leuchtmittelanordnungen simuliert dargestellt werden.

In einer Weiterbildung der Erfindung ist es möglich, dass die erste Anzeigevorrichtung bzw. das Display 11 und/oder die zweite Anzeigevorrichtung bzw. die Leuchtmittelanordnungen 13, 14 eine entsprechende Zielposition einer bestimmten ULD (gemäß Ladeplan) im Frachtraum anzeigt (analog zu einem Kennzeichnungsbereich K).

Hierfür steht die Recheneinheit 12 mit Auslesevorrichtungen an der Frachttür in kommunikativer Verbindung, wobei die Auslesevorrichtungen dazu ausgebildet sind, entsprechende Identifikationsmittel an den ULDs auszulesen, die durch die Frachttür in den Frachtraum geladen werden.

Derartige Identifikationsmitteln können beispielsweise als RFID-Tags oder Bluetooth-Tags oder NFC-Tags ausgebildet sein. Auf den Identifikationsmitteln können relevante Informationen in Bezug auf die entsprechende ULD (sowie deren Inhalt) auslesbar hinterlegt sein - beispielsweise, Maße, Gewicht, Absender, Empfänger, etc.

Diese mittels der Auslesevorrichtungen erfassten Informationen werden mit Ladeplan-Daten mittels der Steuervorrichtung bzw. mittels der Recheneinheit 12 abgeglichen, wobei die Ladeplan-Daten beispielsweise zuvor über eine entsprechende Datenübertragung von einer (Airline-)Zentrale erhalten werden.

Eine Verfolgung und Ortung der ULDs durch den Frachtraum für eine Echtzeitverfolgung auf dem Display 11 wird mittels weiterer Auslesevorrichtungen für die Identifikationsmittel, die innerhalb des Frachtraums angeordnet sind, ermöglicht. Alternativ oder zusätzlich kann eine Ortung der ULDs mittels Überdeckungssensoren, die an entsprechenden Systemkomponenten S, beispielsweise an PDUs, angeordnet sind, erfolgen oder unterstützt werden.

Zumindest auf dem Display 11 kann beispielsweise auf diese Weise auch eine Echtzeitposition einer ULD während eines Ladeprozesses durch eine entsprechende Visualisierung verfolgt werden. Eine ULD kann auf dem Display 11 bzw. auf dem virtuellen Frachtraumgrundriss F beispielsweise durch ein entsprechendes (maßstabsgetreues) Rechteck visualisiert werden.

Zur Unterstützung des Ladepersonals kann ferner eine Zielposition einer hierfür vorgesehenen ULD mittels der zweiten Anzeigevorrichtung bzw. mittels der Leuchtmittelanordnungen 13, 14 zur Orientierung während des Transportes unmittelbar auf dem Frachtdeck aufleuchten.

Wenn eine ULD an der finalen (geplanten) Position angekommen und verriegelt ist, dann können weitere Auslesevorrichtungen, die beispielsweise im Frachtboden, in/an Roller-Trays oder in/an der Bordwand des Flugzeuges angeordnet sind, die aktuelle Ladeposition ermitteln und an die Recheneinheit 12 übermitteln.

Auf dem Display 11 des Bedienpanels 10a der Steuerungsvorrichtung kann eine entsprechende Meldung der aktuellen Ladeposition erscheinen. Diese Meldung kann dann von dem Ladepersonal durch Betätigung einer Bestätigungs-Taste (z.B. ENTER) am Bedienpanel 10a bestätigt werden.

Abschließend (nach dem Ladeprozess aller ULDs) kann die Recheneinheit 12 bzw. die Steuerungsvorrichtung auf diese Weise einen Ladereport erstellen, der die korrekte Beladung des Flugzeuges bestätigt. Dieser Report kann beispielsweise über die Recheneinheit 12 direkt zurück an die (Airline-)Zentrale verschickt werden. Somit werden zusätzlich zur korrekten Ladekonfiguration auch die Ladezeiten dokumentiert.

An dieser Stelle sei darauf hingewiesen, dass alle oben beschriebenen Teile für sich alleine gesehen und in jeder Kombination, insbesondere der in den Zeichnungen dargestellten Details, als erfindungswesentlich beansprucht werden.

### Bezugszeichenliste

- L1 - L4: Ladekonfigurationen
- S1 - S4: Auswahlschaltelemente
- F: Frachtraumgrundriss
- T: Frachttür
- S: Systemkomponenten
- K: Kennzeichnungsbereich
- 10: Steuerungsvorrichtung
- 10a: Bedienpanel der Steuerungsvorrichtung
- 11: Display
- 12: Recheneinheit
- 13, 14: Leuchtmittelanordnungen
- 15: Leuchtmittel
- 16: Speichereinheit
- 17: Steuermitteleinrichtung

## Patentansprüche

1. Steuerungsvorrichtung (10) für ein Frachtladesystem auf einem Frachtdeck eines Frachtflugzeugs, folgendes aufweisend:
eine Vielzahl von Auswahlschaltelementen (S1, S2, S3, S4) zur Auswahl jeweils einer Ladekonfiguration (L1, L2, L3, L4);
mindestens eine erste Anzeigevorrichtung, umfassend ein Display (11) zur Ausgabe eines mindestens teilweisen Abbilds des Frachtdecks,
mindestens eine zweite Anzeigevorrichtung, die eine Vielzahl von Leuchtmittelanordnungen (13, 14) zur Anordnung auf dem Frachtdeck, insbesondere auf Systemkomponenten (S) des Frachtladesystems, aufweist, sowie eine Recheneinheit (12), die dazu ausgebildet ist:
a) basierend auf Signalen von mindestens einigen der Auswahlschaltelementen (S1, S2, S3, S4) eine ausgewählte Ladekonfiguration (L1, L2, L3, L4) zu bestimmen;
b) unter Verwendung der ausgewählten Ladekonfiguration (L1, L2, L3, L4) einen Kennzeichnungsbereich (K) auf dem Frachtdeck und/oder eine Kennzeichnungsauswahl von Systemkomponenten (S) zu bestimmen;
c) den Kennzeichnungsbereich (K) und/oder die Kennzeichnungsauswahl unter Verwendung der ersten Anzeigevorrichtung und der zweiten Anzeigevorrichtung (13, 14) zu visualisieren.

2. Steuerungsvorrichtung (10) nach Anspruch 1,
**dadurch gekennzeichnet, dass**
das mindestens eine Display (11) zur Ausgabe des mindestens teilweisen Abbilds des Frachtdecks ausgebildet ist, derart, dass der Kennzeichnungsbereich (K) und/oder die Kennzeichnungsauswahl im/als Teil des Abbilds visualisiert wird.

3. Steuerungsvorrichtung (10) nach Anspruch 1 oder 2, **dadurch gekennzeichnet, dass** die Recheneinheit (12) kommunikativ, insbesondere über einen Bus, mit der zweiten Anzeigevorrichtung (13, 14) verbunden ist.

4. Steuerungsvorrichtung (10) nach einem der vorhergehenden Ansprüche,
**dadurch gekennzeichnet, dass**
jede Leuchtmittelanordnung (13, 14) eine Vielzahl von Leuchtmitteln (15), beispielsweise LEDs, aufweist, und die Leuchtmittel (15) in Gruppen zusammengefasst sind, derart, dass mittels der Leuchtmittelanordnungen (13, 14) der Kennzeichnungsbereich (K) und/oder die Kennzeichnungsauswahl auf dem Frachtdeck visualisierbar ist.

5. Steuerungsvorrichtung (10) nach einem der vorhergehenden Ansprüche,
**dadurch gekennzeichnet, dass**
die Leuchtmittelanordnungen (13, 14) auf den oder einigen Systemkomponenten (S), vorzugsweise auf Rollenantriebseinheiten auf dem Frachtladedeck, des Frachtladesystems anordenbar bzw. angeordnet sind.

6. Steuerungsvorrichtung (10) nach einem der vorhergehenden Ansprüche, **dadurch gekennzeichnet, dass**
die Recheneinheit (12) dazu ausgebildet ist, erste und zweite Steuersignale von mindestens einer Steuermitteleinrichtung (17) zu empfangen und in Reaktion auf das erste Steuersignal, den Kennzeichnungsbereich (K) auf dem Frachtdeck und/oder die Kennzeichnungsauswahl von Systemkomponenten (S) zu bestimmen, und/oder in Reaktion auf das zweite Steuersignal Systemkomponenten (S) innerhalb des Kennzeichnungsbereichs (K) und/oder die Kennzeichnungsauswahl der Systemkomponenten (S) anzusteuern.

7. Steuerungsvorrichtung (10) nach einem der vorhergehenden Ansprüche,
**dadurch gekennzeichnet, dass**
die Recheneinheit (12) dazu ausgebildet ist, mit einer Speichereinheit (16) zu kommunizieren, wobei auf der Speichereinheit (16) Informationen in Bezug auf einen Frachtraumgrundriss (F) und/oder Informationen in Bezug auf die Vielzahl von Ladekonfigurationen (L1, L2, L3, L4) gespeichert sind.

8. Frachtladesystem eines Frachtflugzeugs, umfassend eine Steuerungsvorrichtung (10) nach einem der vorhergehenden Ansprüche.

9. Frachtladesystem eines Frachtflugzeugs nach Anspruch 8,
**dadurch gekennzeichnet, dass**
die mindestens eine erste Anzeigevorrichtung an einem Bedienpanel (10a) in der Nähe einer Frachttür (T) des Frachtflugzeugs angeordnet ist und
dass eine Vielzahl von Leuchtmittelanordnungen (13, 14) auf dem Frachtdeck, insbesondere auf Systemkomponenten (S) des Frachtladesystems, vorzugsweise an/in Rollenantriebseinheiten, angeordnet sind, um eine Positionierung von Containern und/oder Paletten zu unterstützen.

10. Verfahren zur Positionierung von Containern und/oder Paletten auf einem Frachtdeck eines Frachtflugzeugs, insbesondere mittels einer Steuerungsvorrichtung (10) nach einem der Ansprüche 1 bis 7, folgende Schritte aufweisend:
- Auswählen einer Ladekonfiguration (L1, L2, L3, L4) aus einer Vielzahl von möglichen Ladekonfigurationen (L1, L2, L3, L4) für Container und/oder Paletten auf dem Frachtdeck;
- Bestimmen eines Kennzeichnungsbereichs (K) auf dem Frachtdeck und/oder einer Kennzeichnungsauswahl von Systemkomponenten (S) unter Verwendung der ausgewählten Ladekonfiguration (L1, L2, L3, L4);
- Visualisieren des Kennzeichnungsbereichs (K) bzw. der Kennzeichnungsauswahl auf mindestens einer ersten Anzeigevorrichtung mit einem Display (11) im Frachtraum sowie unter Verwendung mindestens einer zweiten Anzeigevorrichtung, die eine Vielzahl von Leuchtmittelanordnungen (13, 14) auf dem Frachtdeck, insbesondere auf Systemkomponenten (S) des Frachtladesystems, aufweist.

11. Verfahren nach Anspruch 10,
**dadurch gekennzeichnet, dass**
das graphische Visualisieren des Kennzeichnungsbereichs (K) und/oder der Kennzeichnungsauswahl auf dem Display (11) unter Bezugnahme auf einen Frachtraumgrundriss (F) erfolgt.

12. Verfahren nach Anspruch 10 oder 11,
**dadurch gekennzeichnet, dass**
das Visualisieren unter Verwendung der zweiten Anzeigevorrichtung ein Blinken, ein dauerhaft oder für einen vorbestimmten Zeitraum Aufleuchten von Leuchtmittelanordnungen (13, 14) umfasst.

13. Verfahren nach einem der Ansprüche 10 bis 12,
**gekennzeichnet durch**
ein Abfragen und ein Visualisieren eines aktivierten Bereichs bzw. einer aktivierten Ladekonfiguration (L1, L2, L3, L4) des Frachtladesystems.

14. Verfahren nach einem der Ansprüche 10 bis 13,
**gekennzeichnet durch**
ein Steuern von Systemkomponenten (S) innerhalb des Kennzeichnungsbereichs (K) und/oder der Kennzeichnungsauswahl von Systemkomponenten (S).

15. Computerlesbares (Speicher-)Medium, umfassend Instruktionen, die bei der Ausführung durch mindestens eine Recheneinheit diese veranlassen, ein Verfahren nach einem der Ansprüche 10 bis 14 zu implementieren.

## Claims

1. A control device (10) for a cargo loading system on a cargo deck of a cargo aircraft, comprising the following:
a plurality of selection switch elements (S1, S2, S3, S4) each for selecting a loading configuration (L1, L2, L3, L4);
at least one first indicator device, comprising a display (11) for outputting an at least partial depiction of the cargo deck,
at least one second indicator device comprising a plurality of light source arrangements (13, 14) to be arranged on the cargo deck, in particular on system components (S) of the cargo loading system, and
a computing unit (12), which is designed to:
a) determine a selected loading configuration (L1, L2, L3, L4) based on signals from at least some of the selection switch elements (S1, S2, S3, S4);
b) use the selected loading configuration (L1, L2, L3, L4), determine an identification region (K) on the cargo deck and/or an identification selection of system components (S);
c) visualize the identification region (K) and/or the identification selection using the first indicator device and the second indicator device (13, 14).

2. The control device (10) according to Claim 1,
**characterized in that**
the at least one display (11) is designed to output the at least partial depiction of the cargo deck, in such a way that the identification region (K) and/or the identification selection is visualized in/as part of the depiction.

3. The control device (10) according to Claim 1 or 2,
**characterized in that**
the computing unit (12) has a communicative connection, in particular via a bus, to the second indicator device (13, 14).

4. The control device (10) according to any one of the preceding claims, **characterized in that**
each light source arrangement (13, 14) has a plurality of light sources (15), for example LEDs, and the light sources (15) are combined into groups in such a way that the identification region (K) and/or the identification selection can be visualized on the cargo deck by means of the light source arrangements (13, 14).

5. The control device (10) according to any one of the preceding claims, , **characterized in that**
the light source arrangements (13, 14) are arrangeable or arranged on the or several system components (S), preferably on roller drive units on the cargo loading dock, of the cargo loading system.

6. The control device (10) according to any one of the preceding claims, **characterized in that**
the computing unit (12) is designed to receive first and second control signals from at least one control means device (17) and, in reaction to the first control signal, to determine the identification region (K) on the cargo deck and/or the identification selection of system components (S), and/or, in reaction to the second control signal, to activate system components (S) within the identification region (K) and/or the identification selection of the system components (S).

7. The control device (10) according to any one of the preceding claims, **characterized in that**
the computing unit (12) is designed to communicate with a storage unit (16), wherein items of information with respect to a cargo space outline (F) and/or items of information with respect to the plurality of loading configurations (L1, L2, L3, L4) are stored on the storage unit (16).

8. A cargo loading system of a cargo aircraft, comprising a control device (10) according to any one of the preceding claims.

9. The cargo loading system of a cargo aircraft according to Claim 8, **characterized in that**
the at least one first indicator device is arranged at an operating panel (10a) in the vicinity of a cargo door (T) of the cargo aircraft, and a plurality of light source arrangements (13, 14) are arranged on the cargo deck, in particular on system components (S) of the cargo loading system, preferably on/in roller drive units, to assist positioning of containers and/or pallets.

10. A method for positioning containers and/or pallets on a cargo deck of a cargo aircraft, in particular by means of a control device (10) according to any one of Claims 1 to 7, comprising the following steps:
- selecting a loading configuration (L1, L2, L3, L4) from a plurality of possible loading configurations (L1, L2, L3, L4) for containers and/or pallets on the cargo deck;
- determining an identification region (K) on the cargo deck and/or an identification selection of system components (S) using the selected loading configuration (L1, L2, L3, L4);
- visualizing the identification region (K) or the identification selection on at least one first indicator device having a display (11) in the cargo space and using at least one second indicator device, comprising a plurality of light source arrangements (13, 14), on the cargo deck, in particular on system components (S) of the cargo loading system.

11. The method according to Claim 10,
**characterized in that**
the graphic visualization of the identification region (K) and/or the identification selection on the display (11) takes place with reference to a cargo space outline (F).

12. The method according to Claim 10 or 11,
**characterized in that**
the visualizing using the second indicator device comprises flashing, lighting up permanently or for a predetermined time period, of light source arrangements (13, 14).

13. The method according to any one of Claims 10 to 12, **characterized by**
a query and a visualizing of an activated region or activated loading configuration (L1, L2, L3, L4) of the cargo loading system.

14. The method according to any one of Claims 10 to 13, **characterized by**
a control of system components (S) within the identification region (K) and/or the identification selection of system components(S).

15. A computer-readable (storage) medium, comprising instructions which, upon execution by at least one computing unit, cause it to implement a method according to any one of Claims 10 to 14.

## Revendications

1. Dispositif de commande (10) pour un système de chargement de fret sur un pont de chargement d'un aéronef de fret, comprenant:
une pluralité d'éléments de commutation de sélection (S1, S2, S3, S4) pour sélectionner respectivement une configuration de chargement (L1, L2, L3, L4);
au moins un premier dispositif d'affichage, comprenant un écran (11) pour fournir une image au moins partielle du pont de chargement,
au moins un deuxième dispositif d'affichage, qui présente une pluralité de dispositifs d'éclairage (13, 14) destinés à être disposés sur le pont de chargement, en particulier sur des composants de système (S) du système de chargement de fret, et
une unité de calcul (12) conçue pour:
a) déterminer une configuration de chargement (L1, L2, L3, L4) sélectionnée sur la base de signaux provenant d'au moins certains des éléments de commutation de sélection (S1, S2, S3, S4);
b) déterminer, en utilisant la configuration de chargement (L1, L2, L3, L4) sélectionnée, une zone d'identification (K) sur le pont de chargement et/ou une sélection d'identification de composants de système (S);
c) visualiser la zone d'identification (K) et/ou la sélection d'identification en utilisant le premier dispositif d'affichage et le deuxième dispositif d'affichage (13, 14).

2. Dispositif de commande (10) selon la revendication 1,
**caractérisé en ce que**
au moins un écran (11) est conçu pour délivrer l'image au moins partielle du pont de chargement, de telle sorte que la zone d'identification (K) et/ou la sélection d'identification soit visualisée dans/comme partie de l'image.

3. Dispositif de commande (10) selon la revendication 1 ou 2,
**caractérisé en ce que**
l'unité de calcul (12) est reliée au deuxième dispositif d'affichage (13, 14) par communication, notamment par l'intermédiaire d'un bus.

4. Dispositif de commande (10) selon l'une des revendications précédentes,
**caractérisé en ce que**
chaque dispositif d'éclairage (13, 14) présente une pluralité de moyens d'éclairage (15), par exemple des LED, et les moyens d'éclairage (15) sont regroupés de telle sorte que la zone d'identification (K) et/ou la sélection d'identification sur le pont de chargement peuvent être visualisées au moyen des dispositifs d'éclairage (13, 14).

5. Dispositif de commande (10) selon l'une des revendications précédentes,
**caractérisé en ce que**
les dispositifs d'éclairage (13, 14) peuvent être disposés ou sont disposés sur les ou sur certains des composants de système (S), de préférence sur des unités d'entraînement à rouleaux sur le pont de chargement de fret, du système de chargement de fret.

6. Dispositif de commande (10) selon l'une des revendications précédentes,
**caractérisé en ce que**
l'unité de calcul (12) est conçue pour recevoir des premier et deuxième signaux de commande d'au moins un dispositif de moyen de commande (17) et, en réponse au premier signal de commande, pour déterminer la zone d'identification (K) sur le pont de chargement et/ou la sélection d'identification de composants de système (S) et/ou, en réponse au deuxième signal de commande, pour commander des composants de système (S) à l'intérieur de la zone d'identification (K) et/ou la sélection d'identification des composants de système (S).

7. Dispositif de commande (10) selon l'une des revendications précédentes,
**caractérisé en ce que**
l'unité de calcul (12) est conçue pour communiquer avec une unité de mémoire (16), dans laquelle des informations concernant un plan de compartiment de chargement (F) et/ou des informations concernant la pluralité de configurations de chargement (L1, L2, L3, L4) sont stockées sur l'unité de mémoire (16).

8. Système de chargement de fret d'un aéronef de fret, comprenant un dispositif de commande (10) selon l'une des revendications précédentes.

9. Système de chargement de fret d'un aéronef de fret selon la revendication 8,
**caractérisé en ce que**
l'au moins un premier dispositif d'affichage est disposé sur un panneau de commande (10a) à proximité d'une porte de fret (T) de l'aéronef de fret et une pluralité de dispositifs d'éclairage (13, 14) sont disposés sur le pont de chargement, en particulier sur des composants de système (S) du système de chargement de fret, de préférence sur/dans des unités d'entraînement à rouleaux, pour faciliter le positionnement de conteneurs et/ou de palettes.

10. Procédé de positionnement de conteneurs et/ou de palettes sur un pont de chargement d'un aéronef de fret, en particulier au moyen d'un dispositif de commande (10) selon l'une des revendications 1 à 7, comprenant les étapes suivantes:
- Sélection d'une configuration de chargement (L1, L2, L3, L4) parmi une pluralité de configurations de chargement (L1, L2, L3, L4) possibles pour des conteneurs et/ou des palettes sur le pont de chargement;
- Détermination d'une zone d'identification (K) sur le pont de chargement et/ou d'une sélection d'identification de composants de système (S) en utilisant la configuration de chargement (L1, L2, L3, L4) sélectionnée;
- Visualisation de la zone d'identification (K) ou de la sélection d'identification sur au moins un premier dispositif d'affichage avec un écran (11) dans le compartiment de fret et en utilisant au moins un deuxième dispositif d'affichage qui présente une pluralité de dispositifs d'éclairage (13, 14) sur le pont de chargement, en particulier sur des composants de système (S) du système de chargement de fret.

11. Procédé selon la revendication 10,
**caractérisé en ce que**
la visualisation graphique de la zone d'identification (K) et/ou de la sélection d'identification sur l'écran (11) s'effectue par référence à un plan de compartiment de fret (F).

12. Procédé selon la revendication 10 ou 11,
**caractérisé en ce que**
la visualisation en utilisant le deuxième dispositif d' affichage comprend un clignotement, un éclairage permanent ou pendant une période prédéterminée de dispositifs d'éclairage (13, 14).

13. Procédé selon l'une des revendications 10 à 12,
**caractérisé par**
une interrogation et une visualisation d'une zone activée ou d'une configuration de chargement (L1, L2, L3, L4) activée du système de chargement de fret.

14. Procédé selon l'une des revendications 10 à 13,
**caractérisé par**
une commande des composants de système (S) dans la zone d'identification (K) et/ou la sélection d'identification des composants de système (S).

15. Support (mémoire) lisible par ordinateur comprenant des instructions qui, lorsqu'elles sont exécutées par au moins une unité de calcul, amènent celle-ci à mettre en oeuvre un procédé selon l'une des revendications 10 à 14.
